# EUROPEAN PATENT SPECIFICATION

(11) **EP 4 507 287 B1**
(45) Date of publication and mention of the grant of the patent: **13.05.2026**
(21) Application number: 24193204.5
(22) Date of filing: 06.08.2024
(51) Int. Cl.: H04M 3/51, G10L 15/26, H04M 3/42

(54) **SYSTEM FOR AN AGENT TO SIMULTANEOUSLY SERVICE MULTIPLE CUSTOMER DEVICES**
SYSTEM FÜR EINEN AGENT ZUR GLEICHZEITIGEN BEDIENUNG MEHRERER KUNDENVORRICHTUNGEN
SYSTÈME POUR UN AGENT POUR LE SERVICE SIMULTANÉ DE PLUSIEURS DISPOSITIFS CLIENTS

(30) Priority: 08.08.2023 US 202318231667
(43) Date of publication of application: 12.02.2025
(73) Proprietor: Mitel Networks Corporation, Ottawa, Ontario K2K 3K1 (CA)
(72) Inventor: Braganza, Jonathan, Ottawa, K2E 6P2 (CA)
(74) Representative: McDougall, James

(56) References cited:
- EP-A1- 4 435 702
- US-A1- 2011 075 819
- US-A1- 2021 144 253

## Description

### Field of the Invention

This disclosure relates to a system and devices that enable a single customer service representative to simultaneously communicate with multiple customers. The system and devices could function in a virtual reality (VR or metaverse) environment, or on a telephonic or any non-VR computer network.

### Background

Many companies are beginning to create a presence in the metaverse through virtual stores, which are meant for customers to visit as they would brick and mortar stores. The metaverse is a virtual space in which users can create an avatar and virtually interact with others from essentially any location using devices such as a 3D screen, a VR headset, a mobile phone, or a personal computer (PC). Customer service agents may also choose to operate a device that enables them to enter the metaverse.

In a commerce metaverse each avatar may be unique to a certain person. This means that even though the metaverse is virtual, when a customer visits a metaverse store, unless there is someone such as a virtual customer service agent present who can assist the customer, the customer must wait until a customer service representative (also called an agent, representative, or contact center agent) is available.

While in the metaverse, customers (also called users) may visit a store to speak to a representative about a product or service. As an example, a user could visit a bank in order to obtain help with his/her account or learn about the bank's services. The bank will have staff that are able to assist the user, but similar to the real world, where there are limited number of staff, there are also a limited number of metaverse staff. Thus, the customer may be required to wait in line (virtually) while waiting for a free customer service agent. A business may also choose to allow a bot to handle simple customer queries, but if a customer wants to speak directly to an agent, he/she may have to wait.

Contact center agents thus receive interactions from customers in many environments and in many forms, such as email, chat, SMS, or voice. Typically for a customer contact center, an agent can handle many chat, SMS, or email interactions simultaneously, because the interactions are asynchronous. For voice interactions, an agent is basically limited to a single interaction with one customer. There are currently many tools that permit a type of a conversation to change, such as TTS (text-to-speech) or ASR (automatic speech recognition). This occurs in a metaverse environment and other agent/customer environments.

Meeting online (chat or video) is presently limited in its ability to enhance the customer experience, because of, for example, the shortcomings of pretext markup language (HTML) or codecs to increase the clarity of the audio and video. Additionally, call centers largely focus only on resource management (such as automatic call distribution (ACD) or agent routing) and knowledge management (selecting and/or preparing an agent for the customer call) in tailoring the experience for a customer.

Contact call center systems (or "call centers") are thus equipped to route incoming calls to the proper agents. Interactive voice responses (IVRs) can implement a user-interface design that uses audio prompts. The situational reality, however, at either end of the call remains unchanged; the agent is at a call center with a computer screen and/or phone, and the customer is on his/her computer and/or phone. Today, call center systems are constrained due to static support practices, such as communications between a customer and the customer service center being through a website or telephone call.
EP 4435702 A1 describes a computer system and method configured to create a virtual reality (VR) commerce space in which a single agent can simultaneously interact with multiple customers.
US 2021144253 A1 describes a system includes a memory, and a processor configured to convert an audio stream of a speech of a customer during a customer call session into customer-originated text.
US2011075819A1 describes a customer support system enhanced with virtual world features to make the support experience more interactive and pleasant.

### Summary

A first aspect of this disclosure provides a computer system according to claim 1 and a computer implemented method according to claim 8. Preferred embodiments are provided by the dependent claims.

### Brief Description of the Drawings

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 shows a computer system for a VR-commerce space according to aspects of this disclosure.
FIG. 2 shows a computer method according to aspects of the system of FIG. 1.
FIG. 3 shows a computer method according to aspects of the system of FIG. 1.
FIG. 4 shows an alternate computer system according to aspects of this disclosure not utilizing a metaverse.
FIG. 5 shows a computer method according to aspects of the system of FIG. 4.
FIG. 6 shows a computer method according to aspects of the system of FIG. 4.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### Detailed Description

This disclosure proposes utilizing technologies to allow for interaction with multiple customers and a single agent, wherein the interactions can occur in a metaverse or any type of customer/agent interaction environment, such as call centers or on-line chats. Currently, an agent can enter into a voice conversation with a customer utilizing a telephony system, or by using a VR headset if the communication is occurring in the metaverse. As mentioned above, a limitation is that the agent can realistically only handle one customer communication at a time. According to aspects of this disclosure, the agent would instead use a traditional chat interface to "speak" to customers by converting text to a voice and in that manner service multiple customers simultaneously. Or, instead or in addition, the agent's voice could be converted to text to assist in servicing multiple customers simultaneously. The customer(s)' voice responses to the agent could be converted to text or, instead or in addition, the customer(s)' text could be converted to voice. The communications could take place using a traditional telephonic or computer system.

In one example, the customer would believe he/she is speaking to an agent, but in fact the agent could be typing chat messages to the customer which are spoken using text-to-speech (TTS) technology. To make the conversation flow better, the system could include a speech generator programmed to (1) identify and answer some customer questions in order to provide more available time for the agent, and/or (2) interject typical speech-related nuances in order to simulate actual conversation if the agent is engaged in another communication. This would help allow the agent to serve multiple customers simultaneously because the system could fill in gaps or delays in the agent's speech while the agent is researching an answer or communicating with another customer. For example, the system may automatically generate voice communications to a customer(s) such as "give me a minute to look that up" or "Let me think about that." The goal is to create a natural conversation, and to allow an agent to simultaneously handle multiple customers.

A system and method of this disclosure thus enables a single agent to simultaneously communicate with multiple customers. The agent would preferably use (1) a text medium to communicate in real-time with customers who are using voice communications, (2) a voice medium that is converted to text, (3) a combination of voice medium converted to text and text medium converted to voice, (4) include normal voice or text medium with any of the options (1)-(3), above. Further, customer(s)' communications to the agent can be in the form of any of (1)-(4), above.

This disclosure leverages TTS and ASR in order to create a relatively seamless experience for a customer even though the agent and the customer are initially communicating in different mediums. The system converts text typed by the agent to voice, which the customer would hear, and converts speech by a customer to text, which the agent would read.

This disclosure describes systems and methods that, among other things, permits a single agent to communicate with multiple customers simultaneously in a metaverse commerce space. This is preferably accomplished by the agent receiving voice communications from a plurality (i.e., two or more) of customers, wherein the voice is preferably converted to text via an automatic speech recognition (ASR) device. The agent communicates with the plurality customers by entering text that is converted to voice via a text-to-speech (TTS) device.

The description of embodiments provided herein is merely exemplary and is intended for purposes of illustration only; the following description is not intended to limit the scope of the claims. Moreover, recitation of multiple embodiments having stated features is not intended to exclude other embodiments having additional or fewer features or other embodiments incorporating different combinations of the stated features. The methods and systems according to this disclosure and claims can operate in a premise, cloud-based, or hybrid environment.

As used herein, "engine" refers to a data-processing apparatus, such as a processor, configured to execute computer program instructions, encoded on computer storage medium, wherein the instructions control the operation of the engine. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus.

A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices). In accordance with examples of the disclosure, a non-transient computer readable medium containing program can perform functions of one or more methods, modules, engines and/or other system components as described herein.

As used herein, "database" or "library" refers to any suitable database for storing information, electronic files or code to be utilized to practice embodiments of this disclosure. As used herein, "server" refers to any suitable server, computer or computing device for performing functions utilized to practice embodiments of this disclosure.

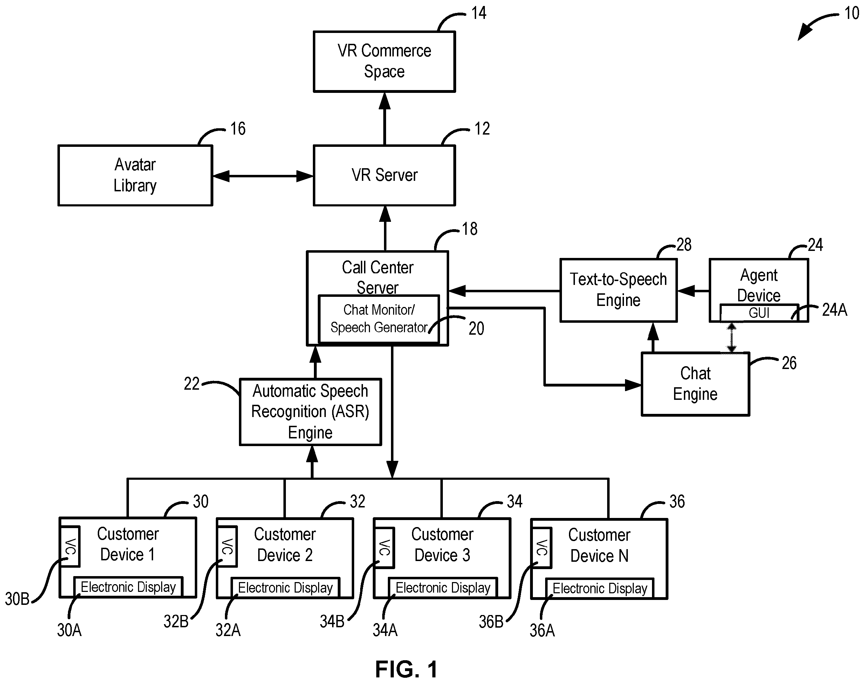

Turning now to the Figures, wherein the purpose is to describe embodiments of this disclosure and not to limit the scope of the claims, FIG. 1 shows an exemplary system 10 according to this disclosure.

FIG. 1 shows a computer system 10 configured to create a virtual reality (VR), or metaverse, commerce space 14 in which an agent can simultaneously interact with multiple (or a plurality of) customers. System 10 includes a VR server 12 that is configured to create the VR commerce space 14. VR server 12 is in communication with an avatar library 16 from which a customer can select an avatar for himself/herself and for the agent. Alternatively, the agent may be permitted to select his/her avatar, or VR server 12 may select an avatar for the agent, or the agent may not have a presence in the VR commerce space.

A call center server 18 is in communication with (1) VR server 12, (2) an agent device 24, either directly or via a text-to-speech (TTS) engine 28 or a chat engine 26, (3) a plurality of customer devices 1-N, designated by reference characters 30, 32, 34, and 36, and (4) an ASR engine 22. Call center server 18 is any computer(s), processor(s), server(s), other device, or combination thereof that can route customer communications, agent communications, and interact with the VR server 12 as set forth herein.

The agent device 24, as shown, has a graphical user interface ("GUI") 24A that permits the agent to enter text (or communicate via voice if desired). GUI 24A is any type of data entry device that permits such communications. A chat engine 26 as shown is a separate electronic device with appropriate software and is positioned between the agent device 24 and the TTS 28. Alternatively, the chat engine may be part of the same computing device on which agent device 24 and/or TTS 28 operates. Or, chat engine 26 may be part of call center server 18. Chat engine 26 is configured to relay text messages between agent device 24 and TTS engine 28 and to receive text messages from call center server 18 and route them to agent device 24.

TTS engine 28 converts text generated by agent device 24 via chat engine 26 into speech and transmits the speech to call center server 18, which then transmits the speech to one or more of the plurality of the customer devices 30, 32, 34, 36 where customers can hear the speech.

Each customer device 30, 32, 34, and 36 as shown has an electronic display designated by 30A, 32A, 34A, and 36A, each of which permit the user to enter the VR commerce space 14 via the call center server 18 and VR server 12. A customer may need to use VR glasses or goggles, or augmented reality (AR) glasses or goggles, to properly view the VR commerce space 14 through the electronic display 30A, 32A, 34A, or 36A. Each of the plurality of customer devices 30, 32, 34, and 36 as shown has a voice communicator (VC) designated as 30B, 32B, 34B, and 36B. Each VC enables the customer device to send and receive voice communications.

In this embodiment, voice (or speech) transmissions by a customer through a voice communicator 30B, 32B, 34B, or 36B are converted to text by an automatic speech recognition (ASR) engine 22, which as shown is a separate electronic device. Alternatively, ASR engine 22 can be at any suitable position in system 10. For example, it may be part of call center server 18 or be between call center server 18 and chat engine 26. Text generated by ASR engine 22 is communicated (in this example) by call center server 18 to chat engine 26, which communicates the text to agent device 24.

A speech generator 20 is a computing device that is programmed to (1) identify and answer some customer questions in order to provide more available time for the agent, and/or (2) interject typical speech-related nuances to one or more of the plurality of customer devices in order to simulate actual conversation if the agent is engaged in another communication or otherwise distracted. For example, speech generator 20 may recognize and be able to answer customer questions such as "what is the shipping address?," "what is the price?," "what is the lead time to ship?," or "where can I see an image of the product?" If the agent is busy with another matter, speech generator 20 may fill in gaps in the conversation with any suitable phrases, such as "I'm still looking," "please give me a few more minutes," "don't hang up, please, I'm still researching the answer." Speech generator 20 as shown is part of call center server 18, but could be a separate computing device or software resident at any suitable location in system 10. Speech generator 20 may also have an artificial intelligence component that learns the answers to customer questions by comparing questions asked and agent's answers. A chat monitor is shown as being part of speech generator 20, although it could be a separate device. The chat monitor detects gaps in the agent's speech for the speech generator 20 to fill.

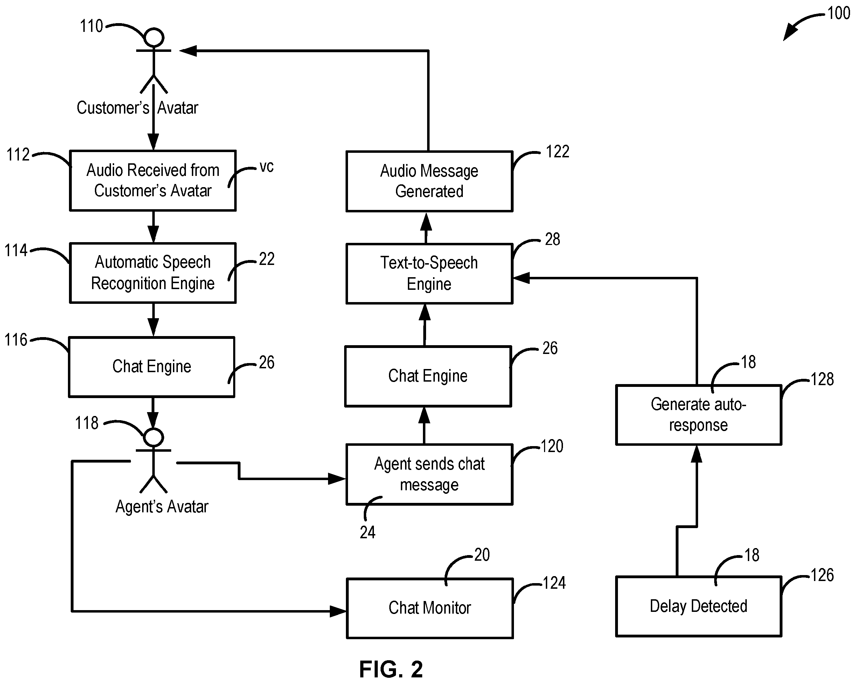

Turning to FIG. 2, a computer method 100 of this disclosure is shown. Here, the customer (or user) has selected a customer avatar 110 from avatar library 16 and avatar 110 is positioned in the VR commerce space 14. Audio 112 is communicated by a voice communicator 30B, 32B, 34B, or 36B to ASR engine 22 at step 114. The ASR engine 22 converts the audio (or speech) into text which is transmitted at step 114 via call center server 18 to chat engine 26, which transmits the text to the agent device 24. Here the agent is represented by agent avatar 118 in VR commerce space 14 although the agent need not have a presence in the VR commerce space 14. If a delay is detected in the agent's response chat monitor 20 at step 124, detects the delay and fills the delay with speech such as "still checking," "looking that up now," "just give me another minute, please" or similar language that lets the user know that the agent is still in communication.

At step 120 the agent responds to the customer by typing a chat message on agent device 24, preferably by using GUI 24A. The chat message is transmitted through chat engine 26, through TTS engine 28 where it is converted to an audio (or voice) message at step 122, which is communicated to customer avatar 110 via a customer device 30, 32, 34, or 36.

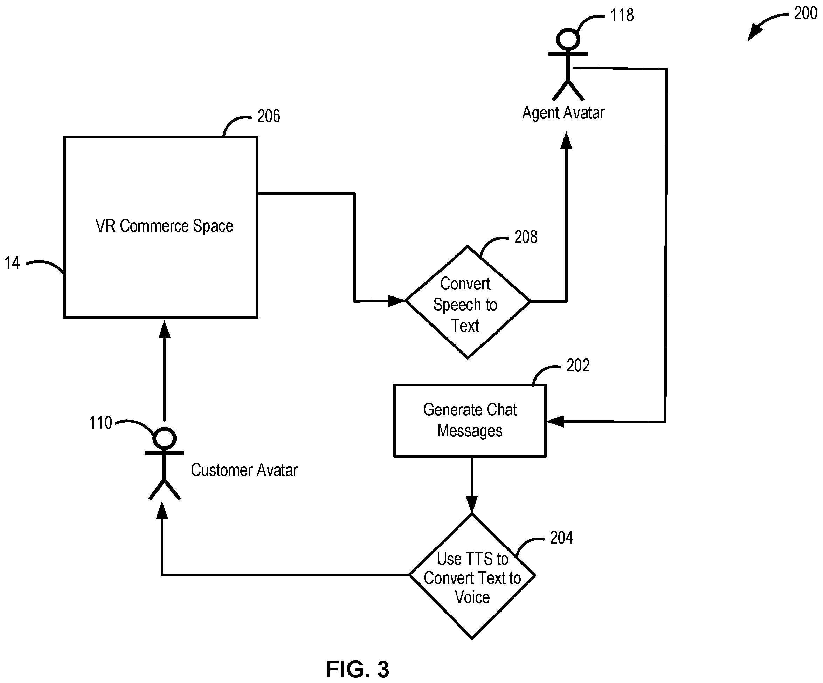

FIG. 3 shows computer method 200 according to aspects of this disclosure that need not utilize a VR commerce space. At step 202 an agent device 118 generates chat messages. The chat messages are converted to voice using a TTS device at step 204 and the voice is transmitted to customer device 110.

Customer device 110 generates speech at step 206, which is converted to text by a suitable device, such as an ASR engine, and then sent to agent device 118.

Chat conversation monitor 20, not shown in FIG. 3, may be used to monitor the communications between the customer and the agent and the speech generator (also shown as 20) may be configured to answer simple questions or fill in gaps in the conversation if the agent is delayed.

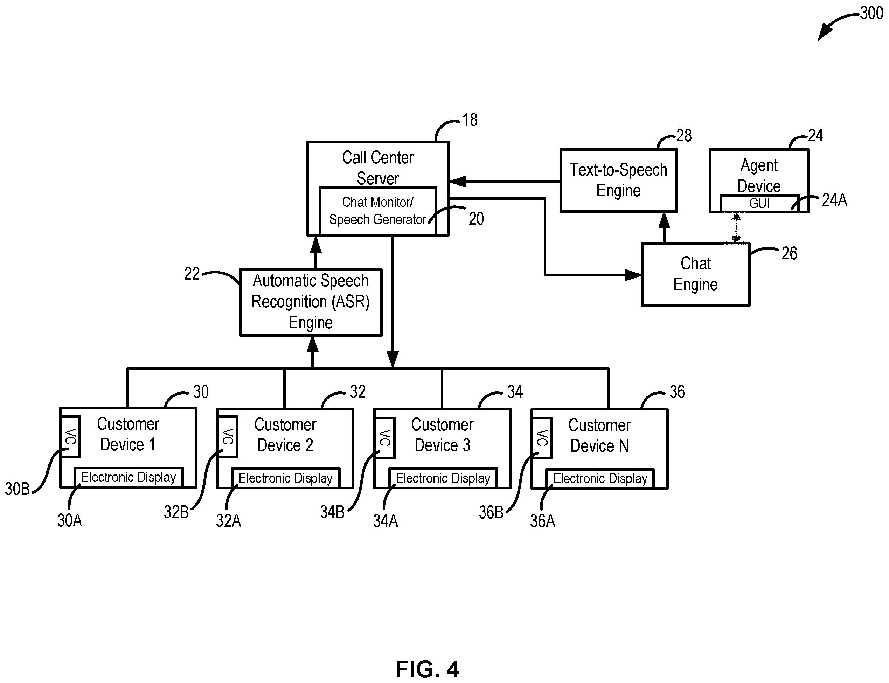

FIG. 4 shows a computer system 300 that is in all respects the same as system 10 except that it does not utilize a VR commerce space. Thus, it lacks VR server 12, VR commerce space 14, and avatar library 16. In all other respects, the structure and function of system 300 is the same as system 10.

A call center server 18 is in communication with (1) an agent device 24, either directly or via a text-to-speech (TTS) engine 28 or a chat engine 26, (2) a plurality of customer devices 1-N, designated by reference characters 30, 32, 34, and 36, and (3) an ASR engine 22. Call center server 18 is any computer(s), processor(s), server(s), other device(s), or combination thereof that can route customer communications, agent communications, and interact with the call center server 18 as set forth herein.

The agent device 24, as shown, has a graphical user interface ("GUI") 24A that permits the agent to enter text (or communicate via voice if desired). GUI 24A is any type of data entry device that permits such communications. A chat engine 26 as shown is a separate electronic device with appropriate software and is positioned between the agent device 24 and the TTS 28. Alternatively, the chat engine may be part of the same computing device on which agent device 24 and/or TTS 28 operates. Or, chat engine 26 may be part of call center server 18. Chat engine 26 is configured to relay text messages between agent device 24 and TTS engine 28 and to receive text messages from call center server 18 and route them to agent device 24.

TTS engine 28 converts text generated by agent device 24 via chat engine 26 into speech and transmits the speech to call center server 18, which then transmits the speech to one or more of the plurality of the customer devices 30, 32, 34, 36, where respective customers can hear the speech.

Each customer device 30, 32, 34, and 36 as shown preferably has an electronic display designated by 30A, 32A, 34A, and 36A. Each of the plurality of customer devices 30, 32, 34, and 36 as shown has a voice communicator (VC) designated as 30B, 32B, 34B, and 36B. Each VC enables the respective customer device to send and receive voice communications.

In this embodiment, voice (or speech) transmissions by a customer through a voice communicator 30B, 32B, 34B, or 36B are converted to text by an automatic speech recognition (ASR) engine 22, which as shown is a separate electronic device. Alternatively, ASR engine 22 can be at any suitable position in system 300. For example, it may be part of call center server 18 or be between call center server 18 and chat engine 26. Text generated by ASR engine 22 is communicated (in this example) by call center server 18 to chat engine 26, which communicates the text to agent device 24.

A chat monitor/speech generator 20 is a computing device that is programmed to (1) identify and answer some customer questions in order to provide more available time for the agent, and/or (2) interject typical speech-related nuances to one or more of the plurality of customer devices in order to simulate actual conversation if the agent is engaged in another communication or otherwise distracted. For example, speech generator 20 may recognize and be able to answer customer questions such as "what is the shipping address?," "what is the price?," "what is the lead time to ship?," or "where can I see an image of the product?" If the agent is busy with another matter, speech generator 20 may fill in gaps in the conversation with any suitable phrases, such as "I'm still looking," "please give me a few more minutes," "don't hang up, please, I'm still researching the answer." Speech generator 20 as shown is part of call center server 18, but could be a separate computing device or software resident at any suitable location in system 300. Speech generator 20 may also have an artificial intelligence component that learns the answers to customer questions by comparing questions asked and agent's answers. A chat monitor is shown as being part of speech generator 20, although it could be a separate device. The chat monitor detects gaps in the agent's speech for the speech generator to fill.

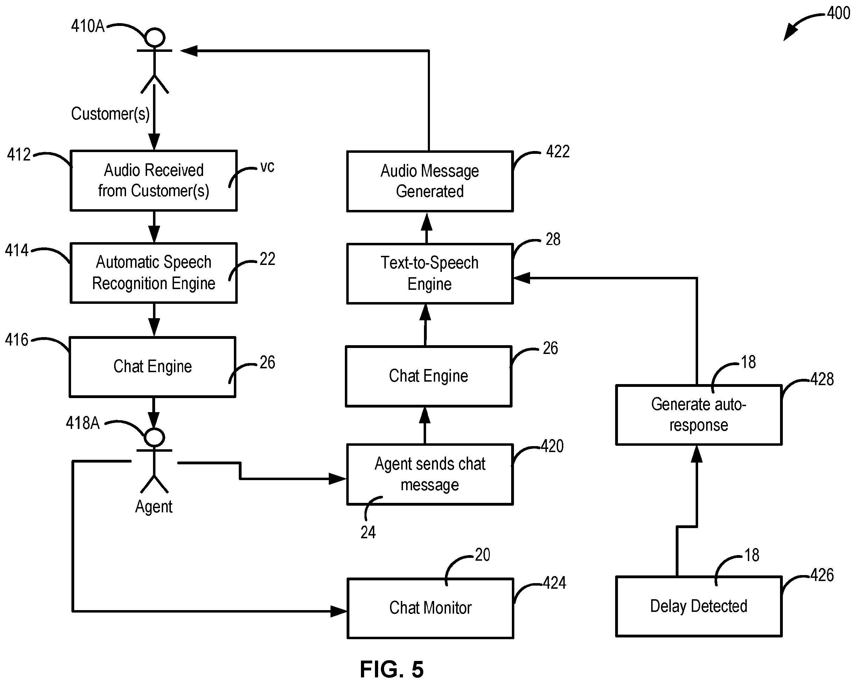

FIG. 5 illustrates a computer method 400 that is in all respects the same as method 100 except that there is no VR commerce space and no avatars. Audio 412 is communicated by a voice communicator 30B, 32B, 34B, or 36B to ASR engine 22 at step 414. The ASR engine 22 converts the audio (or speech) into text which is transmitted at step 414 via call center server 18 to chat engine 26, which transmits the text to the agent device 24. If a delay is detected in the agent's response chat monitor 20 at step 424, the delay is detected at step 426 and filled at step 428 with speech such as "still checking," "looking that up now," "just give me another minute, please" or similar language that lets the user know that the agent is still in communication.

At step 420 the agent responds to the customer by typing a chat message on agent device 24, preferably by using GUI 24A. The chat message is transmitted through chat engine 26, through TTS engine 28 where it is converted to an audio (or voice) message at step 422, which is communicated to customer device 110 via a customer device 30, 32, 34, or 36.

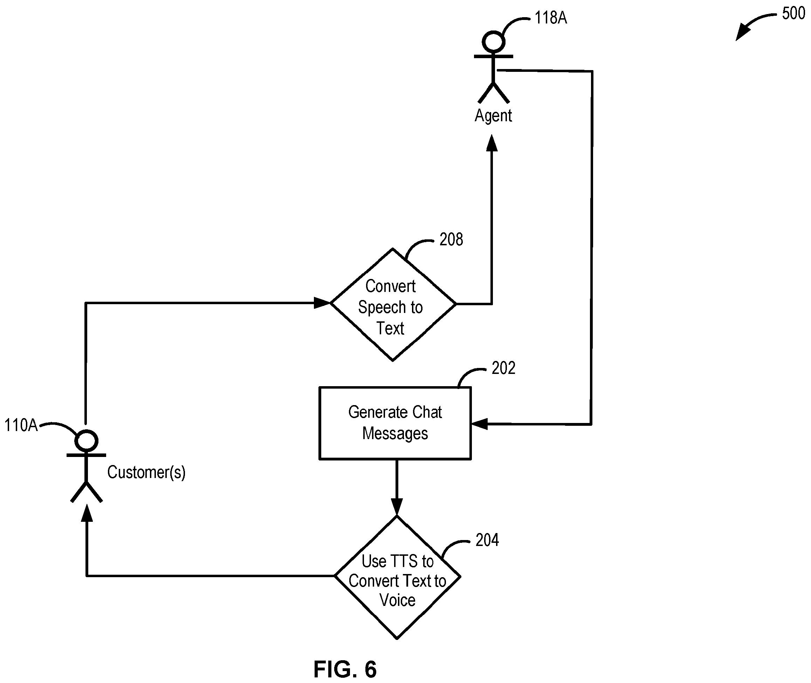

FIG. 6 illustrates a computer method 500 that is in all respects the same as method 200 except that the is no VR commerce space and no avatars.

The features of the various embodiments described herein may be stand alone or combined in any combination. Further, unless otherwise noted, various illustrated steps of a method can be performed sequentially or at the same time, and not necessarily be performed in the order illustrated. It will be recognized that changes and modifications may be made to the exemplary embodiments without departing from the scope of the present invention. These and other changes or modifications are intended to be included within the scope of the present invention, as expressed in the following claims.

## Claims

1. A computer system (10) in which an agent can simultaneously interact with multiple customers, the computer system comprising:
a call center server (18) configured to communicate with a) a plurality of customer devices (30, 32, 34, 36), and b) an agent device (24) having a graphical user interface (24A) configured to permit an agent to enter text into the agent device; and
a text-to-speech, TTS, engine (28) that converts text entered into the agent device into speech that is transmitted by the call center server to one or more of the plurality of customer devices;
wherein the call center server is further configured to permit the agent device to communicate simultaneously with each of the plurality of customer devices,
wherein the call center server is further configured to receive a command from any of the plurality of customer devices to communicate with the agent device by speech or by text, and **characterised by**:
wherein if the call center server detects a pause or interruption in a communication from the agent device to one of the plurality of customer devices it is configured to fill the pause or interruption with a voice filler.

2. The computer system of claim 1, wherein the TTS engine is configured to convert SMS messages, email messages, and/or chat messages from the agent device to speech on each of the plurality of customer devices.

3. The computer system of claim 1 or claim 2, wherein the call center server provides the agent with the option to select the use of voice communications sent from the agent device to any of the plurality of customer devices.

4. The computer system of any preceding claim, wherein the call center server is further configured to answer some questions posed by a customer without input from the agent.

5. The computer system of any preceding claim, wherein speech by a customer is converted by the call center server to text on the agent device utilizing an automatic speech recognition engine.

6. The computer system of any preceding claim, wherein the call center server is further configured to generate bots that are configured to communicate with one or more of the plurality of customer devices, wherein the call center server is configured to control the bots' communications.

7. The computer system of any preceding claim, that further includes the plurality of customer devices and wherein each of the plurality of customer devices includes an electronic display configured to display text generated by the agent device.

8. A computer-implemented method for permitting a plurality of customer devices (30, 32, 34, 36) to simultaneously interact with an agent device (24), the method comprising the steps of:
utilizing a call center server (18) to communicate with the plurality of customer devices, and with the agent device, in order to permit each of the plurality of customer devices to communicate simultaneously with the agent device, wherein the call center server is further configured to receive a command from any of the plurality of customer devices to communicate with the agent device by speech or by text;
utilizing a text-to-voice translator (28), permitting the agent to communicate via the agent device with text or symbols entered into a graphical user interface (24A) of the agent device, wherein the text-to-voice translator translates the symbols or text into voice on at least one of the plurality of customer devices in communication with the agent device, **characterised by**:
wherein if the call center server detects a pause or interruption in a communication from the agent device to one of the plurality of customer devices it is configured to fill the pause or interruption with a voice filler.

## Patentansprüche

1. Computersystem (10), in dem ein Agent gleichzeitig mit mehreren Kunden interagieren kann, wobei das Computersystem Folgendes umfasst:
einen Callcenter-Server (18), der dazu konfiguriert ist, zu kommunizieren mit
a) einer Vielzahl von Kundenvorrichtungen (30, 32, 34, 36) und
b) einer Agentenvorrichtung (24) mit einer grafischen Benutzerschnittstelle (24A), die dazu konfiguriert ist, einem Agenten zu gestatten, Text in die Agentenvorrichtung einzugeben; und eine Text-zu-Sprache-Engine, TTS-Engine (28), die in die Agentenvorrichtung eingegebenen Text in Sprache umwandelt, die durch den Callcenter-Server an eine oder mehrere der Vielzahl von Kundenvorrichtungen übertragen wird;
wobei der Callcenter-Server ferner dazu konfiguriert ist, der Agentenvorrichtung zu gestatten, gleichzeitig mit jeder der Vielzahl von Kundenvorrichtungen zu kommunizieren,
wobei der Callcenter-Server ferner dazu konfiguriert ist, einen Befehl von einer beliebigen der Vielzahl von Kundenvorrichtungen zu empfangen, um mit der Agentenvorrichtung per Sprache oder per Text zu kommunizieren, und **gekennzeichnet durch**:
wobei, falls der Callcenter-Server eine Pause oder Unterbrechung in einer Kommunikation von der Agentenvorrichtung an eine der Vielzahl von Kundenvorrichtungen detektiert, er dazu konfiguriert ist, die Pause oder Unterbrechung mit einem Stimmfüllsel zu füllen.

2. Computersystem nach Anspruch 1, wobei die TTS-Engine dazu konfiguriert ist, SMS-Nachrichten, E-Mail-Nachrichten und/oder Chat-Nachrichten von der Agentenvorrichtung auf jeder der Vielzahl von Kundenvorrichtungen in Sprache umzuwandeln.

3. Computersystem nach Anspruch 1 oder Anspruch 2, wobei der Callcenter-Server dem Agenten die Option bereitstellt, die Verwendung von Stimmkommunikationen auszuwählen, die von der Agentenvorrichtung an eine beliebige der Vielzahl von Kundenvorrichtungen gesendet werden.

4. Computersystem nach einem vorhergehenden Anspruch, wobei der Callcenter-Server ferner dazu konfiguriert ist, einige Fragen, die durch einen Kunden gestellt werden, ohne Eingabe von dem Agenten zu beantworten.

5. Computersystem nach einem vorhergehenden Anspruch, wobei Sprache durch einen Kunden unter Nutzung einer Engine zur automatischen Spracherkennung durch den Callcenter-Server auf der Agentenvorrichtung in Text umgewandelt wird.

6. Computersystem nach einem vorhergehenden Anspruch, wobei der Callcenter-Server ferner dazu konfiguriert ist, Bots zu generieren, die dazu konfiguriert sind, mit einer oder mehreren der Vielzahl von Kundenvorrichtungen zu kommunizieren, wobei der Callcenter-Server dazu konfiguriert ist, die Kommunikationen der Bots zu steuern.

7. Computersystem nach einem vorhergehenden Anspruch, das ferner die Vielzahl von Kundenvorrichtungen einschließt und wobei jede der Vielzahl von Kundenvorrichtungen eine elektronische Anzeige einschließt, die dazu konfiguriert ist, durch die Agentenvorrichtung generierten Text anzuzeigen.

8. Computerimplementiertes Verfahren zum Gestatten, dass eine Vielzahl von Kundenvorrichtungen (30, 32, 34, 36) gleichzeitig mit einer Agentenvorrichtung (24) interagiert, wobei das Verfahren die folgenden Schritte umfasst:
Nutzen eines Callcenter-Servers (18), um mit der Vielzahl von Kundenvorrichtungen und mit der Agentenvorrichtung zu kommunizieren, um zu gestatten, dass jede der Vielzahl von Kundenvorrichtungen gleichzeitig mit der Agentenvorrichtung kommuniziert, wobei der Callcenter-Server ferner dazu konfiguriert ist, einen Befehl von einer beliebigen der Vielzahl von Kundenvorrichtungen zu empfangen, um mit der Agentenvorrichtung per Sprache oder per Text zu kommunizieren;
Nutzen eines Text-zu-Stimme-Übersetzers (28), der dem Agenten gestattet, über die Agentenvorrichtung mit Text oder Symbolen zu kommunizieren, die in eine grafische Benutzerschnittstelle (24A) der Agentenvorrichtung eingegeben werden, wobei der Text-zu-Stimme-Übersetzer die Symbole oder den Text auf mindestens einer der Vielzahl von Kundenvorrichtungen in Kommunikation mit der Agentenvorrichtung in Stimme übersetzt, **gekennzeichnet durch**:
wobei, falls der Callcenter-Server eine Pause oder Unterbrechung in einer Kommunikation von der Agentenvorrichtung an eine der Vielzahl von Kundenvorrichtungen detektiert, er dazu konfiguriert ist, die Pause oder Unterbrechung mit einem Stimmfüllsel zu füllen.

## Revendications

1. Système informatique (10) où un agent peut interagir simultanément avec plusieurs clients, le système informatique comprenant :
un serveur de centre d'appels (18) configuré pour communiquer avec
a) une pluralité de dispositifs clients (30, 32, 34, 36), et
b) un dispositif agent (24) présentant une interface utilisateur graphique (24A) configurée pour permettre à un agent d'entrer du texte dans le dispositif agent ; et
un moteur de synthèse de parole, TTS (28) qui convertit du texte entré dans le dispositif agent en parole qui est transmise par le serveur de centre d'appels à un ou plusieurs de la pluralité de dispositifs clients ;
dans lequel le serveur de centre d'appels est en outre configuré pour permettre au dispositif agent de communiquer simultanément avec chacun de la pluralité de dispositifs clients,
dans lequel le serveur de centre d'appels est en outre configuré pour recevoir un ordre en provenance de l'un quelconque de la pluralité de dispositifs clients pour communiquer avec le dispositif agent par la parole ou par texte, **caractérisé par** :
dans lequel si le serveur de centre d'appels détecte une pause ou une interruption dans une communication en provenance du dispositif agent vers l'un de la pluralité de dispositifs clients, il est configuré pour remplir la pause ou l'interruption avec un élément de remplissage vocal.

2. Système informatique de la revendication 1, dans lequel le moteur TTS est configuré pour convertir des messages SMS, des messages mél et/ou des messages de tchat en provenance du dispositif agent en parole sur chacun de la pluralité de dispositifs clients.

3. Système informatique de la revendication 1 ou de la revendication 2, dans lequel le serveur de centre d'appels fournit à l'agent l'option de sélectionner l'utilisation de communications vocales envoyées en provenance du dispositif agent vers l'un quelconque de la pluralité de dispositifs clients.

4. Système informatique d'une quelconque revendication précédente, dans lequel le serveur de centre d'appels est en outre configuré pour répondre à certaines questions posées par un client sans saisie de l'agent.

5. Système informatique d'une quelconque revendication précédente, dans lequel de la parole d'un client est convertie par le serveur de centre d'appels en texte sur le dispositif d'agent en utilisant un moteur de reconnaissance de parole automatique.

6. Système informatique d'une quelconque revendication précédente, dans lequel le serveur de centre d'appels est en outre configuré pour générer des robots qui sont configurés pour communiquer avec un ou plusieurs de la pluralité de dispositifs clients, dans lequel le serveur de centre d'appels est configuré pour commander les communications des robots.

7. Système informatique d'une quelconque revendication précédente, qui comprend en outre la pluralité de dispositifs clients et dans lequel chacun de la pluralité de dispositifs clients comprend un affichage électronique configuré pour afficher du texte généré par le dispositif agent.

8. Procédé mis en œuvre par ordinateur permettant à une pluralité de dispositifs clients (30, 32, 34, 36) d'interagir simultanément avec un dispositif agent (24), le procédé comprenant les étapes de :
utilisation d'un serveur de centre d'appels (18) pour communiquer avec la pluralité de dispositifs clients, et avec le dispositif agent, afin de permettre à chacun de la pluralité de dispositifs clients de communiquer simultanément avec le dispositif agent, dans lequel le serveur de centre d'appels est en outre configuré pour recevoir un ordre en provenance de l'un quelconque de la pluralité de dispositifs clients pour communiquer avec le dispositif agent par la parole ou par texte ;
utilisation d'un traducteur texte-voix (28), permettant à l'agent de communiquer par l'intermédiaire du dispositif agent avec du texte ou des symboles entrés dans une interface utilisateur graphique (24A) du dispositif agent, dans lequel le traducteur texte-voix traduit les symboles ou le texte en voix sur au moins un de la pluralité de dispositifs clients en communication avec le dispositif agent, **caractérisé par** :
dans lequel si le serveur de centre d'appels détecte une pause ou une interruption dans une communication en provenance du dispositif agent vers l'un de la pluralité de dispositifs clients, il est configuré pour remplir la pause ou l'interruption avec un élément de remplissage vocal.
